# EUROPEAN PATENT SPECIFICATION

(11) **EP 3 885 855 B1**
(45) Date of publication and mention of the grant of the patent: **09.10.2024**
(21) Application number: 19886888.7
(22) Date of filing: 28.10.2019
(51) Int. Cl.: G05B 19/05

(54) **CONTROL SYSTEM, SUPPORT DEVICE, AND SUPPORT PROGRAM**
STEUERUNGSSYSTEM, UNTERSTÜTZUNGSVORRICHTUNG UND UNTERSTÜTZUNGSPROGRAMM
SYSTÈME DE COMMANDE, DISPOSITIF DE SUPPORT ET PROGRAMME DE SUPPORT

(30) Priority: 22.11.2018 JP 2018219266
(43) Date of publication of application: 29.09.2021
(73) Proprietor: OMRON Corporation, Shiokoji-dori, Shimogyo-ku, Kyoto-shi Kyoto 600-8530 (JP)
(72) Inventor: FUJIMURA, Ryosuke, Kyoto-shi, Kyoto 600-8530 (JP); SATO, Fumiaki, Kyoto-shi, Kyoto 600-8530 (JP)
(74) Representative: Becker, Eberhard
(86) International application number: PCT/JP2019/042162
(87) International publication number: WO 2020/105373

(56) References cited:
- WO-A1-2018/155426
- JP-A- 2008 310 479
- JP-A- 2014 137 621
- JP-A- 2015 176 319
- US-A1- 2015 248 115
- SIEMENS AG KATALOG: "Motion Control Drives siemens.com/drives SINAMICS S120 und SIMOTICS", 1 January 2017 (2017-01-01), pages 1 - 850, XP055936546, Retrieved from the Internet <URL:https://siebert-automation.com/wp-content/uploads/2017/09/Siemens-Sinamics-S120-Simotics-Gesamtkatalog-DE-Siebert-Automation.pdf> [retrieved on 20220629]
- SIEMENS AG: "SINAMICS Inbetriebnahmehandbuch", 30 November 2017 (2017-11-30), pages 1 - 452, XP055936280, Retrieved from the Internet <URL:https://cache.industry.siemens.com/dl/files/310/109754310/att_937472/v1/s120_startdrive_commiss_man_1117_de-DE.pdf> [retrieved on 20220628]
- ANONYMOUS: "Mitsubishi general-purpose AC servo", MELSERVO SYSTEM GENERAL CATALOG 2017. MITSUBISHI SERVO AMPLIFIERS & MOTORS, 19 October 2017 (2017-10-19), JP, pages 12, 16 - 26, 27, 29, XP009527244
- NAKAKAWAJI, TETSUO: "Latest trends on factory automation technologies for "e-f@ctory"", MITSUBISHI DENKI GIHO, vol. 90, no. 4, 15 April 2016 (2016-04-15), pages 210 - 214, XP009527101, ISSN: 0369-2302

## Description

### [Technical Field]

The present invention relates to a control system, a support device included in a control system, and a support program.

### [Background Art]

In many manufacturing sites, the introduction of safety systems is progressing in order to use facilities and machines safely. The safety systems are used to provide safety functions conforming to international standards, and include safety components such as a safety controller, a safety sensor, a safety switch, and a safety relay.

A safety system is also required to provide the safety function to a drive device that drives a servomotor or the like for driving a facility or a machine. In a safety system, Ethernet for Control Automation Technology (EtherCAT) (registered trademark) may be employed as a network for exchanging data, and Non-Patent Literature 1 discloses some provisions regarding safety functions in the standards of the EtherCAT Technology Group (ETG) which is an organization related to EtherCAT.

Siemens Ag Katalog provides a catalog for the motion control drives of SINAMICS S120 and SIMOTICS. Siemens Ag provides a startdrive software for configuring SINAMICS S120.

### [Summary of Invention]

### [Technical Problem]

According to the provisions disclosed in Document: ETG.6100.2S(R) V1.2.0, all safety functions executed by a drive device are set in advance to be enabled as a default. More specifically, in designation information for designating enabling or disabling of the safety functions, all flags assigned to respective bits of a first byte are fixed to flags indicating enabling.

However, in the actual use, there may be cases where enabled/disabled settings of the safety functions are required to be changed depending on work details in a process, such as enabling the safety functions in one process and disabling the safety functions in another process. In such a case, a user is required to separately prepare a program for changing the enabled/disabled settings of the safety functions from the default state, which may increase an amount of work. In the programming work, since source code is required to be written, there is a risk that the user will unintentionally write erroneous setting details.

The present invention has been made to solve the above problems, and an objective thereof is to facilitate setting of enabling or disabling of safety functions.

### [Solution to Problem]

The present invention is provided by the subject-matter of the independent claims. The following disclosure serves a better understanding of the present invention. According to an example of the present disclosure, there is provided a control system. The control system includes a drive device that has at least one or more safety functions and drives a motor; a controller that outputs a command related to the at least one or more safety functions to the drive device according to a safety program; and a support device that supports development of the safety program. The safety program includes information for disabling a specific safety function among the at least one or more safety functions. The support device includes a reception unit that receives designation, given by a user, of enabling or disabling of each of the at least one or more motion safety functions, a generation unit that generates the safety program in accordance with the designation of enabling or disabling received by the reception unit, and a transfer unit that transfers the safety program generated by the generation unit to the controller.

According to this disclosure, the user designates enabling or disabling of a specific safety function for the support device, and thus the safety program is generated in accordance with the designation of enabling or disabling and is transferred to the controller. Consequently, the user can generate the safety program for designating enabling or disabling of the specific safety function without writing source code, and can easily set enabling or disabling of the safety function.

In the above disclosure, the support device provides a user interface for receiving the designation of enabling or disabling of each of the at least one or more safety functions via the reception unit.

According to this disclosure, the user can designate enabling or disabling of each of the at least one or more safety functions by using the user interface provided by the support device.

In the above disclosure, the support device provides a user interface for receiving the designation of enabling or disabling of each of the at least one or more safety functions via the reception unit for a specific drive device selected from among a plurality of the drive devices.

According to this disclosure, the user can designate enabling or disabling of each of the at least one or more safety functions by using the user interface provided by the support device for the specific drive device selected from among a plurality of the drive devices.

In the above disclosure, in response to designation of disabling of the specific safety function among the at least one or more safety functions, the support device prohibits use of a variable referred to by the safety program related to the specific safety function.

According to the invention, it is possible to prevent a situation in which the user unintentionally sets the variable referred to by a program related to the disabled safety function.

In the above disclosure, the support device provides a notification of prohibition of use of the variable.

According to this disclosure, it is possible to notify the user that the variable referred to by a program related to the disabled safety function is prohibited from being used.

According to the invention, the safety program generated by the generation unit is uneditable by the user.

According to this disclosure, since the safety program generated by the support device is not able to be edited by the user, it is possible to prevent the occurrence of a problem that set details of enabling or disabling of a safety function designated for the support device by the user do not coincide with set details in the safety program generated by the support device.

According to the invention, there is provided a support device that supports development of a safety program related to at least one or more safety functions executed by a controller controlling a drive device driving a motor. The safety program includes information for disabling a specific safety function among the at least one or more safety functions. The support device includes a reception unit that receives designation, given by a user, of enabling or disabling of each of the at least one or more safety functions; a generation unit that generates the safety program in accordance with the designation of enabling or disabling received by the reception unit; and a transfer unit that transfers the safety program generated by the generation unit to the controller.

According to the invention, the user designates enabling or disabling of a specific safety function for the support device, and thus the safety program is generated in accordance with the designation of enabling or disabling and is transferred to the controller. Consequently, the user can generate the safety program for designating enabling or disabling of the specific safety function without writing source code, and can thus easily set enabling or disabling of the safety function.

According to the invention, there is provided a support program for supporting development of a safety program related to at least one or more safety functions executed by a controller controlling a drive device driving a motor. The support program includes information for disabling a specific safety function among the at least one or more safety functions. The support program causes a computer to execute receiving designation, given by a user, of enabling or disabling of each of the at least one or more safety functions; generating the safety program in accordance with the received designation of enabling or disabling; and transferring the generated safety program to the controller.

### [Effects of Invention]

According to the present invention, it is possible to facilitate setting of enabling or disabling of safety functions.

### [Brief Description of Drawings]

Fig. 1 is a schematic diagram illustrating an application example of a control system according to the present invention.
Fig. 2 is a schematic diagram illustrating information of a first byte for designating enable/disable setting of safety functions defined in the ETG standards.
Fig. 3 is a schematic diagram illustrating a hardware configuration example of a standard controller constituting the control system according to the present embodiment.
Fig. 4 is a schematic diagram illustrating a hardware configuration example of a safety controller constituting the control system according to the present embodiment.
Fig. 5 is a schematic diagram illustrating a hardware configuration example of a safety driver and a servomotor constituting the control system according to the present embodiment.
Fig. 6 is a schematic diagram illustrating a hardware configuration example of a support device constituting the control system according to the present embodiment.
Fig. 7 is a schematic diagram illustrating an example of function sharing in the control system according to the present embodiment.
Fig. 8 is a sequence diagram illustrating an example of a process procedure related to the safety functions of the safety driver of the control system according to the present embodiment.
Fig. 9 is a diagram illustrating an example of a motion safety function provided by the control system according to the present embodiment.
Fig. 10 is a schematic diagram illustrating installation examples of standard control and safety control in the control system according to the present embodiment.
Fig. 11 is a schematic diagram illustrating an example of transition in enabling or disabling of the motion safety function according to the present embodiment.
Fig. 12 is a schematic diagram illustrating an enabled/disabled setting portion for the safety functions in a safety program according to the present embodiment.
Fig. 13 is a diagram illustrating an example of a user interface for setting enabling/disabling of the motion safety function provided by the support device according to the present embodiment.
Fig. 14 is a diagram illustrating an example of a user interface for setting enabling/disabling of the motion safety function provided by the support device according to the present embodiment.
Fig. 15 is a diagram illustrating an example of a user interface for setting variables in the safety program provided by the support device according to the present embodiment.
Fig. 16 is a flowchart for describing a safety enable/disable program generation process executed by the support device according to the present embodiment.
Fig. 17 is a flowchart for describing a safety command reception process executed by the safety driver according to the present embodiment.

### [Description of Embodiments]

An embodiment of the present invention will be described with reference to the drawings. The same or similar portions in the drawings will be given the same reference numeral, and description thereof will not be repeated.

### <A. Application example>

First, an application example of the present invention will be described.

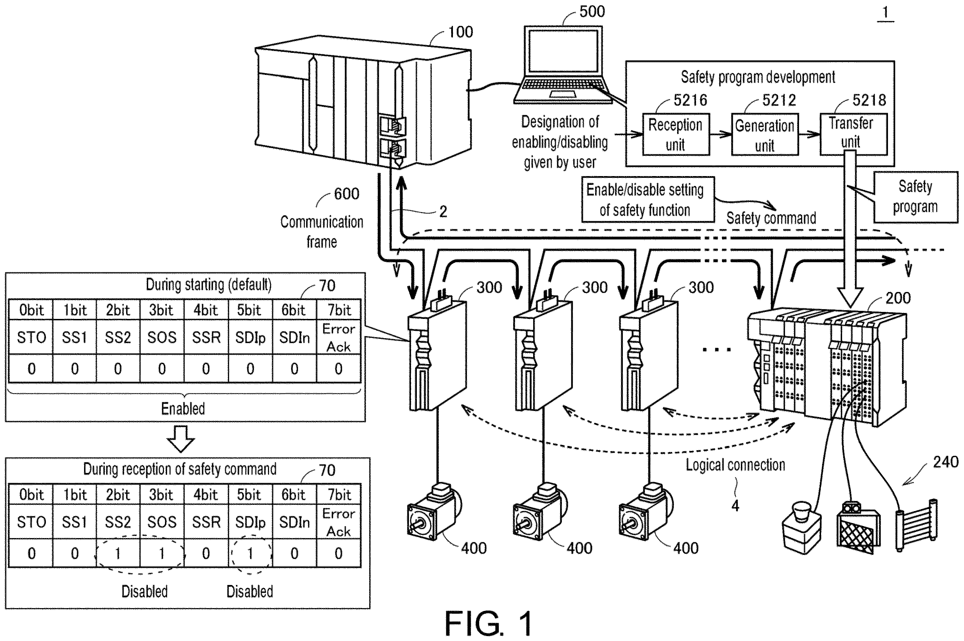

Fig. 1 is a schematic diagram illustrating the invention. The control system 1 according to the present embodiment provides not only safety functions defined in, for example, IEC 61508 but also some safety functions related to a drive device, such as safe torque off (STO), safe stop 1 (SS1), safe stop 2 (SS2), and safe operation stop (SOS) defined in Non-Patent Literature 2 ("IEC 61800-5-2: 2016 Adjustable speed electrical power drive systems - Part 5-2: Safety requirements - Functional", International Electrotechnical Commission, 2016-04-18).

With reference to Fig. 1, the control system 1 generally includes a standard controller 100, and a safety controller 200 and one or a plurality of safety drivers (safety servo drivers) 300 connected to the standard controller 100 via a field network 2. Each of the safety drivers 300 drives a servomotor 400 electrically connected thereto. The servomotor 400 is only an example, and any type of motor may be used. An entity of the safety driver 300 may be a servo driver, and may be a general-purpose inverter device. In the following description, the safety driver 300 will be described as an example of a "drive device".

The standard controller 100 executes standard control (standard control 150 that will be described later) on control targets including the servomotor 400 according to a standard control program (a standard control program 1104 that will be described later) that is created in advance. Typically, the standard controller 100 executes control calculation in a cyclic manner in accordance with input signals from one or a plurality of sensors (not illustrated) to calculate commands for an actuator such as the servomotor 400 in a cyclic manner.

The safety controller 200 corresponds to a "controller", and transmits a safety command related to an operation of a safety function (a safety function 250 that will be described later) to the safety driver 300 according to a safety program (a safety program 2104 that will be described later). The safety controller 200 executes monitoring and control calculation for realizing the safety function 250 for a control target in a cyclic manner separately from the standard controller 100.

The safety controller 200 may receive an input signal from any safety device 240 and/or may output a command to any safety device 240. The safety program 2104 is created in advance by a user by using a development environment provided by a support device 500 that is communicatively connected to the safety controller 200, and is transferred to the safety controller 200.

The safety driver 300 supplies power to the servomotor 400 in response to a command from the standard controller 100 to drive the servomotor 400. The safety driver 300 calculates a rotation position, a rotation speed, a rotation acceleration, and a generated torque of the servomotor 400 in a cyclic manner on the basis of a feedback signal or the like from the servomotor 400.

The safety driver 300 executes a predetermined motion safety function (a motion safety function 360 that will be described later) related to driving of the servomotor 400 in response to a safety command from the safety controller 200. More specifically, the safety driver 300 provides state information necessary for a safety function to the safety controller 200, and executes a motion safety program (a motion safety program 3204 that will be described later) corresponding to a required safety function to adjust or interrupt power supplied to the servomotor 400.

The servomotor 400 has a motor (a three-phase AC motor 402 that will be described later) that is rotated by receiving power from the safety driver 300, and outputs a detection signal as a feedback signal from an encoder (an encoder 404 that will be described later) coupled to a rotation shaft of the motor to the safety driver 300.

The support device 500 supports development on the standard controller 100 side and development on the safety controller 200 side. More specifically, the support device 500 supports development of a standard control program (the standard control program 1104 that will be described later) executed by the standard controller 100, setting related to the standard control 150, and the like as the development on the standard controller 100 side. The support device 500 supports development of a safety program (the safety program 2104 that will be described later) executed by the safety controller 200, setting related to the safety function 250, and the like as the development on the safety controller 200 side. The support device 500 combines one or more pieces of instruction information with each other to provide development environments (a program creation/editing tool, a parser, a compiler, and the like) for generating a program to a user.

In the present specification, "device" is a general term for devices that can perform data communication with other devices via any network such as the field network 2. In the control system 1 according to the present embodiment, the "device" includes the standard controller 100, the safety controller 200, and the safety driver 300.

In the present specification, the terms "standard control" and "safety control" are used in contrast. "Standard control" is a general term for processes for controlling a control target according to a predefined requirement specification. On the other hand, "safety control" is a general term for processes for preventing human safety from being threatened by facilities or machines. The "safety control" is designed to satisfy the requirements for realizing the safety functions defined in IEC 61508 and the like.

In the present specification, safety functions specific to the drive device (safety driver 300) are collectively referred to as a "motion safety function" or simply a "safety function". Typically, the "function" includes the safety functions related to the drive device defined in Non-Patent Literature 2 described above. For example, the "function" includes control for monitoring a position or a speed of a control shaft to secure safety.

In the present specification, "process data" is a general term for data used in at least either the standard control or the safety control. Specifically, the "process data" includes input information that is acquired from a control target, output information that is output to the control target, internal information that is used for control calculation in each device, and the like.

The input information includes, for example, an ON/OFF signal (digital input) detected by a photoelectric sensor or the like, a physical signal (analog input) detected by a temperature sensor or the like, and a pulse signal (pulse input) generated by a pulse encoder or the like. The output information includes, for example, ON/OFF (digital output) for driving a relay or the like, a speed command (analog output) for giving an instruction for a rotation speed or the like of a servomotor, and a displacement command (pulse output) for giving an instruction for a movement amount or the like of a step motor. The internal information includes, for example, state information determined through control calculation in which any process data is input.

In the field network 2 of the control system 1, process data communication is performed, and a communication frame 600 is circulated in a cyclic manner (for example, every several to several tens of msec) among devices with the standard controller 100 as a communication master. A cycle in which the communication frame 600 is transferred will be referred to as a process data communication cycle. In the present embodiment, EtherCAT is used as an example of a protocol for the field network 2 via which the communication frame 600 is transferred in a cyclic manner.

A data region is allocated to each device in the communication frame 600. When the communication frame 600 transferred in a cyclic manner is received, each device writes the current value of preset data into a data region allocated to the device in the received communication frame 600. The communication frame 600 in which the current value has been written is sent to the device in the next stage. The current value of data written by each device can be referred to by other devices.

Since each device writes the current value of the present data into the communication frame 600, the communication frame 600 that is circulated through the field network 2 and returned to the communication master (standard controller 100) includes the latest value collected by each device.

In the present embodiment, a logical connection 4 is formed between the safety controller 200 and each safety driver 300 by using the process data communication. The logical connection 4 is used to exchange data for realizing the safety function 250.

As described above, in a case where EtherCAT is used as a protocol for the field network 2, the logical connection 4 may be formed by using a protocol called FailSafe over EtherCAT (FSoE).

More specifically, a dedicated data region for storing commands exchanged to form the logical connection 4 is allocated to the communication frame 600. The logical connection 4 is formed by exchanging commands between the devices by using the dedicated data region.

As illustrated in Fig. 1, each safety driver 300 stores a safety status 70 for managing enabling or disabling of the motion safety function 360. The motion safety function 360 realized by the safety driver 300 includes safe torque off (STO), safe stop 1 (SS1), safe stop 2 (SS2), safe operation stop (SOS), safe speed range (SSR), safe direction positive (SDIp), and safe direction negative (SDIn). Designation information for designating enabling or disabling of each motion safety function 360 is disposed in a region provided for each bit included in the safety status 70. Error acknowledge (Error Ack) is a function for canceling an error when an error occurs, and is enabled at all times.

Each safety driver 300 has only the motion safety function 360 that is determined in advance. For example, the specific safety driver 300 does not have SSR and has the other functions such as STO, SS1, SS2, SOS, SDIp, and SDIn among the motion safety functions 360 illustrated in Fig. 1. This is only an example, and the remaining safety drivers 300 also have only the motion safety functions 360 that are determined in advance.

The safety driver 300 enables or disables each motion safety function 360 according to the designation information included in the safety status 70. The "designation information" may be any information as long as the information is used to designate enabling or disabling of each of the motion safety functions 360. In the present embodiment, the designation information designates enabling or disabling with a flag represented by "0" or "1". More specifically, when the flag is "0", the motion safety function 360 is enabled, and, when the flag is "1", the motion safety function 360 is disabled.

Flags are fixed such that all of the motion safety functions 360 are enabled during starting (that is, as a default), and details thereof cannot be changed by a user. In other words, all of the motion safety functions 360 are fixed to be enabled as a default. This is required in the provisions disclosed in Document: ETG.6100.2S(R) V1.2.0 described above.

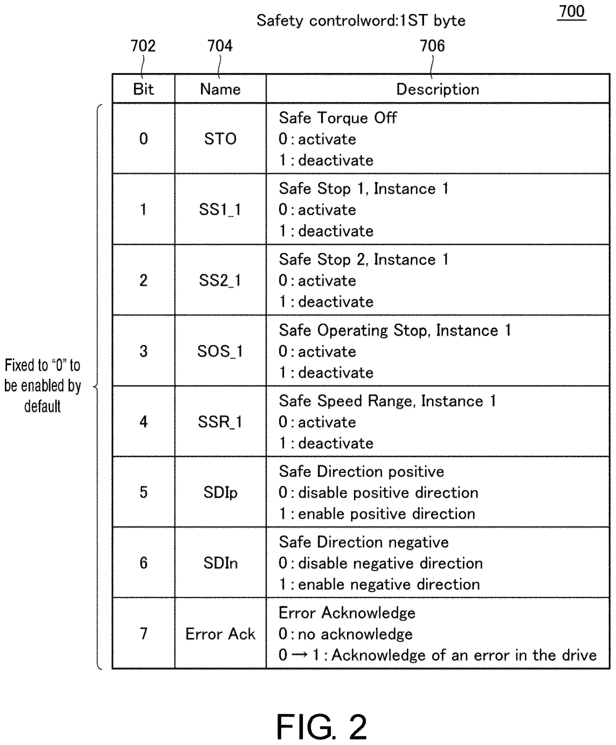

Here, with reference to Fig. 2, enabling/disabling setting of the security functions in the safety status 70 defined in the ETG standards will be described. Fig. 2 is a schematic diagram illustrating information of a first byte for designating enable/disable setting of safety functions defined in the ETG standards.

As illustrated in Fig. 2, Document: ETG.6100.2S(R) V1.2.0 discloses information of a first byte for designating enable/disable setting of safety function. Specifically, control words 700 related to the motion safety functions 360 disclosed in Document: ETG.6100.2S(R) V1.2.0 include a bit field 702, a name field 704, and a description field 706. The respective bits such as a zeroth bit to a seventh bit included in the first byte are disposed in the bit field 702. An abbreviated name of the motion safety function 360 correlated with each bit is displayed in the name field 704. An official name of each motion safety function 360 and an operating state associated with the flag are displayed in the description field 706.

In the present embodiment, the flags are fixed to "0" indicating enabling in a default state with respect to all of the motion safety functions 360. Each motion safety function 360 is required to be set to the flag of "0" as a default.

In the first byte in which enable/disable setting of the safety function as illustrated in Fig. 2 is designated, the flag in each bit from the zeroth bit to the seventh bit is fixed to "0" as a default, and the default state cannot be changed by the user. Although not illustrated, the default state can be changed by the user in a second byte.

"Enabling" of the safety function refers to that a function for performing safety control is in an operating state. For example, STO, SS1, SS2, SOS, and SSR are "active" when the flag is "0". This indicates that the functions for performing safety control are in an operating state. SDIp and SDIn are "disabled" when the flag is "0". This indicates that the motor is prohibited from operating in a positive direction or a negative direction, that is, the functions for performing safety control are in an operating state.

On the other hand, "disabling" of the safety function refers to that the functions for performing safety control is in a non-operating state. For example, STO, SS1, SS2, SOS, and SSR are "deactivated" when the flag is "1". This indicates that the functions for performing safety control are in a non-operating state. SDIp and SDIn are "enabled" when the flag is "1". This indicates that the motor is permitted to operate in the positive direction or the negative direction, that is, the functions for performing safety control are in a non-operating state.

With reference to Fig. 1 again, in each safety driver 300, the flags corresponding to all of the motion safety functions 360 are set to "0" as a default regardless of whether or not the motion safety functions 360 is installed. Thus, regarding the installed motion safety function 360, the default setting is fixed to enabling, so that the function is enabled. In a case where there is the uninstalled motion safety function 360, regarding the uninstalled motion safety function 360, even if a flag is set to enabling, the motion safety function 360 is not executed.

As described above, in each safety driver 300, the default setting is fixed to enabling with respect to all of the motion safety functions 360 regardless of whether or not the motion safety function 360 is installed. However, in actual use, it may be necessary to change the enabled/disabled settings of the safety functions according to work details in the process, such as enabling or disabling the motion safety functions 360.

As a method of changing enabling or disabling of the specific motion safety function 360 afterward, it is conceivable that a safety command from the safety controller 200 includes designation information for enabling or disabling the specific motion safety function 360. For example, in the present embodiment, after the logical connection 4 is established, the safety command can be transmitted to the safety driver 300 from the safety controller 200. When designation information for enabling or disabling the specific motion safety function 360 is included in the safety command, it is possible to change enabling or disabling of the specific motion safety function 360 afterward.

However, in this case, a user is required to create the safety program 2104 by using a tool such as the support device 500 in order to change the enabled/disabled settings of the specific motion safety function 360 from the default state. Thus, a situation in which a work amount increases may occur. Therefore, if the user writes source code and frequently creates the safety program 2104, the efficiency will be reduced. When the user writes the source code, there is a risk that the user will unintentionally write erroneous setting contents. In a case where a plurality of safety drivers 300 is provided in the control system 1, the safety program 2104 is required to be created for all the safety drivers 300, which causes a problem that a work amount becomes enormous.

Therefore, in the control system 1 according to the present embodiment, a method for creating the safety program 2104 as easily as possible without the user writing the source code is proposed.

For example, as illustrated in Fig. 1, the support device 500 includes a reception unit 5216 that receives designation, given by a user, of enabling or disabling for each of one or more motion safety functions 360, a generation unit 5212 that automatically generates the safety program 2104 in accordance with the designation of enabling or disabling, received by the reception unit 5216, and a transfer unit 5218 that transfers the safety program 2104 generated by the generation unit 5212 to the safety controller 200.

Here, regarding "transfer", the support device 500 may convert source code into object code by performing a build, and transfer the safety program 2104 to the safety controller 200 in the form of the object code, or transfer the safety program 2104 to the safety controller 200 in the form of source code without performing the build. The support device 500 may transfer the safety program 2104 to the safety controller 200 via the standard controller 100, or may directly transfer the safety program 2104 to the safety controller 200 without using the standard controller 100.

The user can use the support device 500 to designate enabling or disabling of each of the motion safety functions 360 for the support device 500. The support device 500 automatically generates the safety program 2104 in accordance with enable/disable setting of the motion safety function 360 designated by the user. Thus, the user can generate the safety program 2104 for designating enabling or disabling of each of the motion safety functions 360 without taking the trouble to write the source code.

The "designation information" may be any information as long as the information is information for designating enabling or disabling of each of the motion safety functions 360. In the present embodiment, in the designation information, enabling or disabling of each of the motion safety functions 360 is designated by a flag indicated by "0" or "1" by using a bit string in which bits respectively corresponding to the motion safety functions 360 are arranged. As described above, the user can set a flag in the designation information by using the support device 500 and can thus change enabling or disabling of the specific motion safety function 360 from a default state.

For example, as illustrated in Fig. 1, the flags of all of the motion safety functions 360 are fixed to "0" as a default. Here, when it is desired to disable SS2, SOS, and SDIp for the motion safety functions 360 of the specific safety driver 300, the user may designate setting of a flag corresponding to each of SS2, SOS, and SDIp to "1" (disabled state) for the support device 500. In above-described way, the user designates whether to enable or disable the motion safety function 360 by using the support device 500, and can thus change afterward enabled/disabled settings of the motion safety function 360 defined as a default with the automatically generated safety program 2104.

As described above, the user designates enabling or disabling of the specific motion safety function 360 for the support device 500, and thus the safety program 2104 is generated in accordance with the designation of enabling or disabling and is transferred to the safety controller 200. Consequently, the user can generate the safety program 2104 for designating enabling or disabling of the specific motion safety function 360 without writing source code, and can thus easily set enabling or disabling of the motion safety function 360.

### <B. Configuration example of device included in control system 1>

Next, a configuration example of the device included in the control system 1 will be described.

### (b1: Standard controller 100)

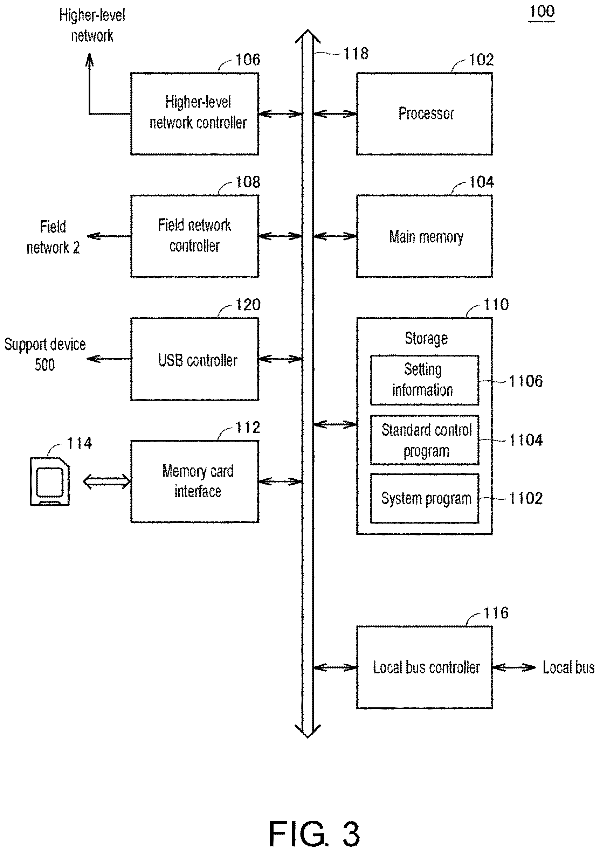

Fig. 3 is a schematic diagram illustrating a hardware configuration example of the standard controller 100 constituting the control system 1 according to the present embodiment. With reference to Fig. 3, the standard controller 100 includes a processor 102, a main memory 104, a storage 110, a higher-level network controller 106, a field network controller 108, a Universal Serial Bus (USB) controller 120, a memory card interface 112, and a local bus controller 116. These components are connected to each other via a processor bus 118.

The processor 102 generally corresponds to a calculation processing part executing control calculation related to the standard control 150, and is configured with a central processing unit (CPU) or a graphics processing unit (GPU). Specifically, the processor 102 reads programs (for example, a system program 1102 and the standard control program 1104) stored in the storage 110, loads the programs to the main memory 104, and executes the programs to realize control calculation related to a control target (for example, the safety driver 300 or the servomotor 400) and various processes that will be described later.

The main memory 104 is configured with a volatile storage device such as a dynamic random access memory (DRAM) or a static random access memory (SRAM). The storage 110 is configured with a nonvolatile storage device such as a solid state drive (SSD) or a hard disk drive (HDD).

The storage 110 stores not only the system program 1102 for realizing fundamental functions but also the standard control program 1104 that is created in accordance with a control target. The storage 110 stores setting information 1106 for setting a variable or the like.

The higher-level network controller 106 exchanges data with any information processing device via a higher-level network.

The field network controller 108 exchanges data with any devices including the safety controller 200 and the safety driver 300 via the field network 2. In the control system 1 illustrated in Fig. 1, the field network controller 108 of the standard controller 100 functions as a communication master of the field network 2.

The USB controller 120 exchanges data with the support device 500 or the like via USB connection.

The memory card interface 112 accepts a memory card 114 that is an example of an attachable and detachable recording medium. The memory card interface 112 can record data on the memory card 114 or read the various types of data (a log, trace data, or the like) from the memory card 114.

The local bus controller 116 exchanges data with any unit connected to the standard controller 100 via a local bus.

Fig. 3 illustrates the configuration example in which the necessary functions are provided by the processor 102 executing the programs, but some or all of the provided functions may be installed by using a dedicated hardware circuit (for example, an application specific integrated circuit (ASIC) or a field programmable gate array (FPGA)). Alternatively, main parts of the standard controller 100 may be realized by using hardware (for example, an industrial PC based on a general-purpose PC) conforming to a general-purpose architecture. In this case, a virtualization technique may be used to execute a plurality of operating systems (OSs) having different uses in parallel and also to execute necessary applications on each OS. A configuration in which functions of a display device, a support device, or the like are integrated into the standard controller 100 may be used.

### (b2: Safety controller 200)

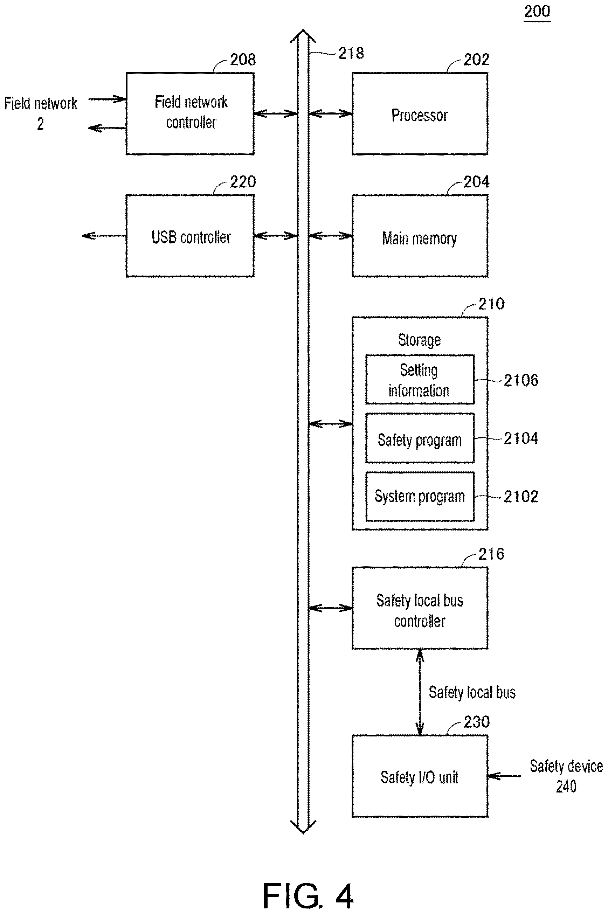

Fig. 4 is a schematic diagram illustrating a hardware configuration example of the safety controller 200 constituting the control system 1 according to the present embodiment. With reference to Fig. 4, the safety controller 200 includes a processor 202, a main memory 204, a storage 210, a field network controller 208, a USB controller 220, and a safety local bus controller 216. These components are connected to each other via a processor bus 218.

The processor 202 generally corresponds to a calculation processing part executing control calculation related to the safety control, and is configured with a CPU or a GPU. Specifically, the processor 202 reads programs (for example, a system program 2102 and the safety program 2104) stored in the storage 210, loads the programs to the main memory 204, and executes the programs to realize control calculation for providing the necessary safety function 250 and various processes that will be described later.

Particularly, the safety controller 200 executes the safety program 2104, and thus outputs a safety command including designation information for designating enabling or disabling of the motion safety function 360 of the safety driver 300 to the safety driver 300. The designation information included in the safety status 70 of the safety driver 300 may be updated on the basis of the designation information included in the safety command.

The main memory 204 is configured with a volatile storage device such as a DRAM or an SRAM. The storage 210 is configured with a nonvolatile storage device such as an SSD or an HDD.

The storage 210 stores not only the system program 2102 for realizing fundamental functions but also the safety program 2104 that is created in accordance with the required safety function 250. The storage 210 stores setting information 2106 for setting a variable or the like.

The field network controller 208 exchanges data with any devices including the standard controller 100 and the safety driver 300 via the field network 2. In the control system 1 illustrated in Fig. 4, the field network controller 208 of the safety controller 200 functions as a communication slave of the field network 2.

The USB controller 220 exchanges data with an information processing device such as the support device 500 via USB connection.

The safety local bus controller 216 exchanges data with any safety unit connected to the safety controller 200 via a safety local bus. Fig. 4 illustrates a safety I/O unit 230 as an example of the safety unit.

The safety I/O unit 230 exchanges input and output signals with any safety device 240. More specifically, the safety I/O unit 230 receives an input signal from the safety device 240 such as a safety sensor or a safety switch. Alternatively, the safety I/O unit 230 outputs a command to the safety device 240 such as a safety relay.

Fig. 4 illustrates the configuration example in which the necessary functions are provided by the processor 202 executing the programs, but some or all of the provided functions may be installed by using a dedicated hardware circuit (for example, an ASIC or an FPGA). Alternatively, main parts of the safety controller 200 may be realized by using hardware (for example, an industrial PC based on a general-purpose PC) conforming to a general-purpose architecture.

### (b3: Safety driver 300 and servomotor 400)

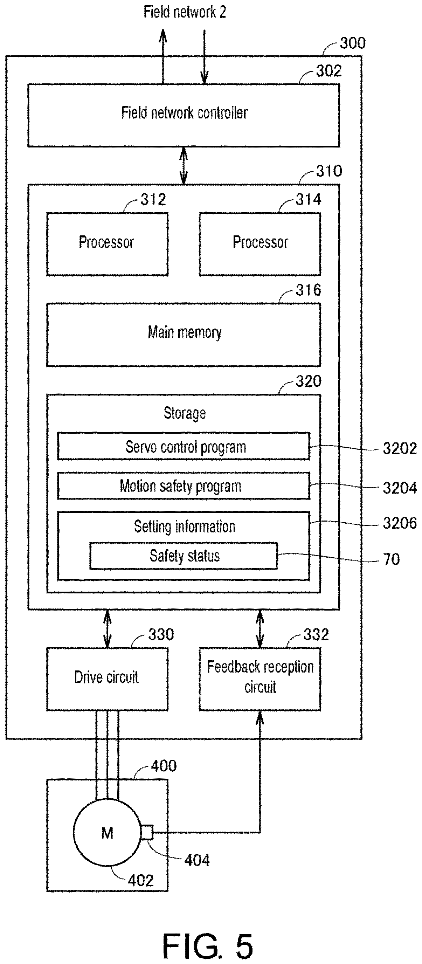

Fig. 5 is a schematic diagram illustrating a hardware configuration example of the safety driver 300 and the servomotor 400 constituting the control system 1 according to the present embodiment. With reference to Fig. 5, the safety driver 300 includes a field network controller 302, a control part 310, a drive circuit 330, and a feedback reception circuit 332.

The field network controller 302 exchanges data with any devices including the standard controller 100 and the safety controller 200 via the field network 2. In the control system 1 illustrated in Fig. 5, the field network controller 302 of the safety driver 300 functions as a communication slave of the field network 2.

The control part 310 executes a calculation process required to operate the safety driver 300. As an example, the control part 310 includes processors 312 and 314, a main memory 316, and a storage 320.

The processor 312 generally corresponds to a calculation processing part executing control calculation for driving the servomotor 400. The processor 314 generally corresponds to a calculation processing part executing control calculation for providing the safety function 250 related to the servomotor 400. In the present embodiment, the processor 314 disables the specific motion safety function 360 in response to the safety command. Both of the processors 312 and 314 are configured with CPUs and the like.

The main memory 316 is configured with a volatile storage device such as a DRAM or an SRAM. The storage 320 is configured with a nonvolatile storage device such as an SSD or an HDD.

The storage 320 stores a servo control program 3202 for realizing servo control 350 that will be described later, a motion safety program 3204 for realizing the motion safety function 360 that will be described later, and setting information 3206 for setting a variable or the like that is open to other devices. The safety status 70 for managing enabled/disabled settings of the motion safety function 360 is stored in the setting information 3206.

Fig. 5 exemplifies a configuration in which the two processors 312 and 314 execute control calculation for different purposes to improve reliability, but the present invention is not limited thereto, and any configuration may be employed as long as the configuration can realize the required safety function 250. For example, in a case where a single processor includes a plurality of cores, control calculation corresponding to each of the processors 312 and 314 may be executed. Fig. 5 illustrates the configuration example in which the necessary functions are provided by the processors 312 and 314 executing the programs, but some or all of the provided functions may be installed by using a dedicated hardware circuit (for example, an ASIC or an FPGA).

The drive circuit 330 includes a converter circuit, an inverter circuit, and the like, generates power with designated voltage, current, and phase in response to a command from the control part 310, and supplies the power to the servomotor 400.

The feedback reception circuit 332 receives a feedback signal from the servomotor 400, and outputs the reception result to the control part 310.

The servomotor 400 typically includes a three-phase AC motor 402 and an encoder 404 provided at a rotation shaft of the three-phase AC motor 402.

The three-phase AC motor 402 is an actuator that receives power supplied from the safety driver 300 and generates torque. Fig. 5 illustrates the three-phase AC motor as an example, but the present invention is not limited thereto, and a DC motor may be used, and a single-phase AC motor or a multi-phase AC motor may be used. An actuator that generates torque along a straight line, such as a linear servo, may be used.

The encoder 404 outputs a feedback signal (typically, a pulse signal corresponding to a rotation speed) corresponding to the rotation speed of the three-phase AC motor 402.

### (b4: Support device 500)

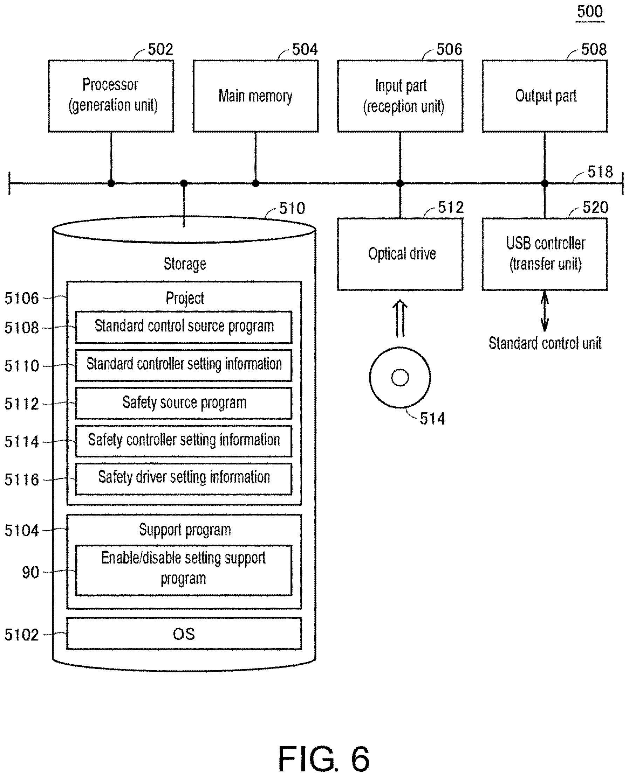

Fig. 6 is a schematic diagram illustrating a hardware configuration example of the support device 500 constituting the control system 1 according to the present embodiment. The support device 500 is implemented by using hardware (for example, a general-purpose PC) conforming to a general-purpose architecture as an example.

With reference to Fig. 6, the support device 500 includes a processor 502, a main memory 504, an input part 506, an output part 508, a storage 510, an optical drive 512, and a USB controller 520. These components are connected to each other via a processor bus 518.

The processor 502 is configured with a CPU or a GPU, reads programs (for example, an OS 5102 and a support program 5104) stored in the storage 510, loads the programs to the main memory 504, and executes the programs to perform various processes that will be described later. In other words, the processor 502 has a function of a computer executing the support program 5104. Particularly, the processor 502 has the function of the generation unit 5212 illustrated in Fig. 1, and generates a safety source program 5112 in accordance with designation of enabling or disabling of the motion safety function 360 received from a user.

The main memory 504 is configured with a volatile storage device such as a DRAM or an SRAM. The storage 510 is configured with a nonvolatile storage device such as an HDD or an SSD.

The storage 510 stores not only the OS 5102 for realizing fundamental functions but also the support program 5104 for providing functions of the support device 500. In other words, the support program 5104 is executed by a computer connected to the control system 1 to implement the support device 50 according to the present embodiment. The support program 5104 includes an enable/disable setting support program 90. The support device 500 executes the enable/disable setting support program 90 to receive designation of enabling or disabling of the motion safety function 360 from a user, and also generates the safety source program 5112 by using the processor 502 in accordance with the received designation of enabling or disabling.

The storage 510 stores project data 5106 that is created by the user in a development environment that is provided by executing the support program 5104.

In the present embodiment, the support device 500 provides a development environment in which setting on each device included in the control system 1 and creation of a program executed by each device can be integrally performed. The project data 5106 includes data generated by using such an integrated development environment. Typically, the project data 5106 includes a standard control source program 5108, standard controller setting information 5110, a safety source program 5112, safety controller setting information 5114, and safety driver setting information 5116.

The standard control source program 5108 is converted into object codes that are then transmitted to the standard controller 100 to be stored in the standard control program 1104 (refer to Fig. 3). The standard control source program 5108 may be transmitted to the standard controller 100 without being converted into object codes. Similarly, the standard controller setting information 5110 is also transmitted to the standard controller 100 to be stored in the setting information 1106 (refer to Fig. 3).

The safety source program 5112 is converted into object codes that are then transmitted to the safety controller 200 to be stored in the safety program 2104 (refer to Fig. 4). The safety source program 5112 may be transmitted to the safety controller 200 without being converted into object codes. Similarly, the safety controller setting information 5114 is also transmitted to the safety controller 200 to be stored in the setting information 2106 (refer to Fig. 4).

The safety driver setting information 5116 is transmitted to the safety driver 300 to be stored in the setting information 3206 (refer to Fig. 5).

The input part 506 is an interface that receives information that is input with a keyboard or a mouse, and has the function of the reception unit 5216 illustrated in Fig. 1. Particularly, the input part 506 receives designation, given by the user, of enabling or disabling of the motion safety function 360. The output part 508 is configured with a display, various indicators, a printer, and the like, and outputs a processing result or the like from the processor 502.

The USB controller 520 has the function of the transfer unit 5218 illustrated in Fig. 1, and exchanges data with the standard controller 100 or the like through USB connection. Particularly, the USB controller 520 transfers the safety source program 5112 that is automatically generated by the processor 502 to the safety controller 200. The USB controller 520 may transfer the safety source program 5112 to the safety controller 200 via the standard controller 100, and may transfer the safety source program 5112 to the safety controller 200 without using the standard controller 100.

The support device 500 has the optical drive 512, and a program is read from a recording medium 514 (for example, an optical recording medium such as a digital versatile disc (DVD)) that stores computer-readable programs in a non-transitory manner and is installed in the storage 510 or the like.

The support program 5104 or the like executed by the support device 500 may be installed via the computer-readable recording medium 514, or may be downloaded from a server device or the like on the network to be installed. The functions provided by the support device 500 according to the present embodiment may be realized in a form of using some modules provided by the OS.

Fig. 6 illustrates the configuration example in which the necessary functions of the support device 500 are provided by the processor 502 executing the programs, but some or all of the provided functions may be installed by using a dedicated hardware circuit (for example, an ASIC or an FPGA).

During an operation of the control system 1, the support device 500 may be detached from the standard controller 100.

### <C. Function sharing in control system 1>

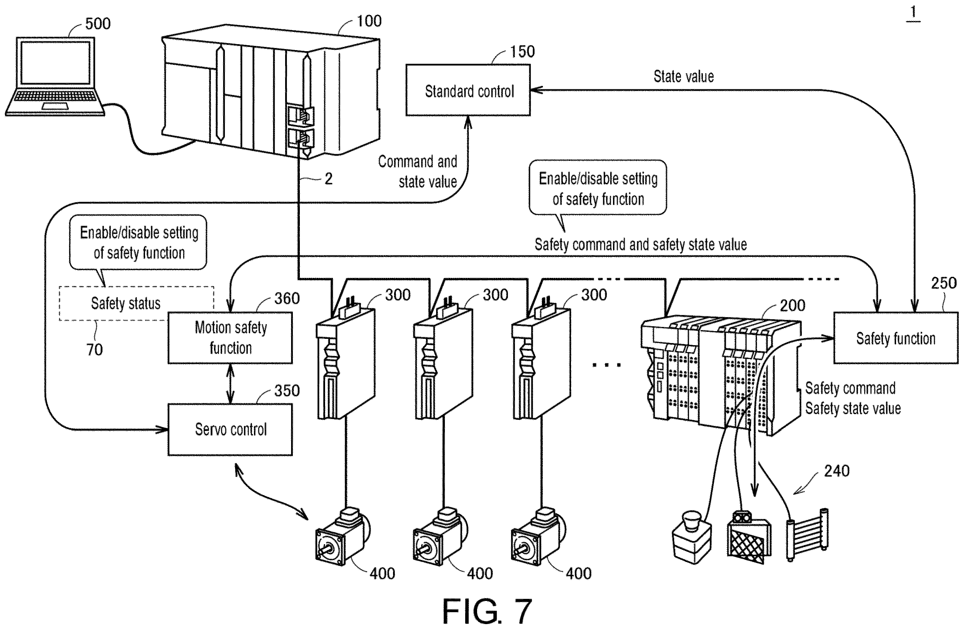

Next, an example of function sharing in the control system 1 will be described. Fig. 7 is a schematic diagram illustrating an example of function sharing in the control system 1 according to the present embodiment.

With reference to Fig. 7, the safety driver 300 executes the servo control 350 in relation to the standard control 150 executed by the standard controller 100. The standard control 150 includes a process of cyclically calculating commands for driving the servomotor 400 according to a user program that is set in a control target in advance. The servo control 350 includes control for driving the servomotor 400 in response to commands that are cyclically calculated through the standard control 150 and a process of acquiring and outputting a state value indicating an operation state of the servomotor 400. The servo control 350 is performed by the processor 312 (refer to Fig. 5) of the safety driver 300.

On the other hand, the safety driver 300 provides the motion safety function 360 in correspondence to the safety function 250 provided by the safety controller 200. The motion safety function 360 is realized by the processor 314 (refer to Fig. 5) of the safety driver 300.

When a predefined condition is established, the safety function 250 enables the predefined safety function 250 on the basis of a state value stored in the standard control 150 executed by the standard controller 100, a state value indicated by a signal from the safety device 240, a state value stored in the safety driver 300, and the like.

The process of enabling the predefined safety function 250 includes, for example, output of a safety command for the safety driver 300 or output of a safety command for the safety device 240 (for example, a safety relay related to the supply of power to a specific device is turned off).

The safety driver 300 executes the motion safety program 3204 to realize the designated motion safety function 360 in response to a safety command from the safety controller 200. The motion safety function 360 that can be executed is defined in advance in each safety driver 300. Depending on the type of the designated motion safety function 360, a process of intervening in the control of the servomotor 400 based on the servo control 350 to interrupt the supply of power to the servomotor 400, or a process of monitoring whether or not a state value of the control of the servomotor 400 based on the servo control 350 is within a predefined restriction range is executed. The motion safety program 3204 enables or disables each motion safety function 360 in accordance with enable/disable setting of a safety function designated by designation information included in the safety status 70.

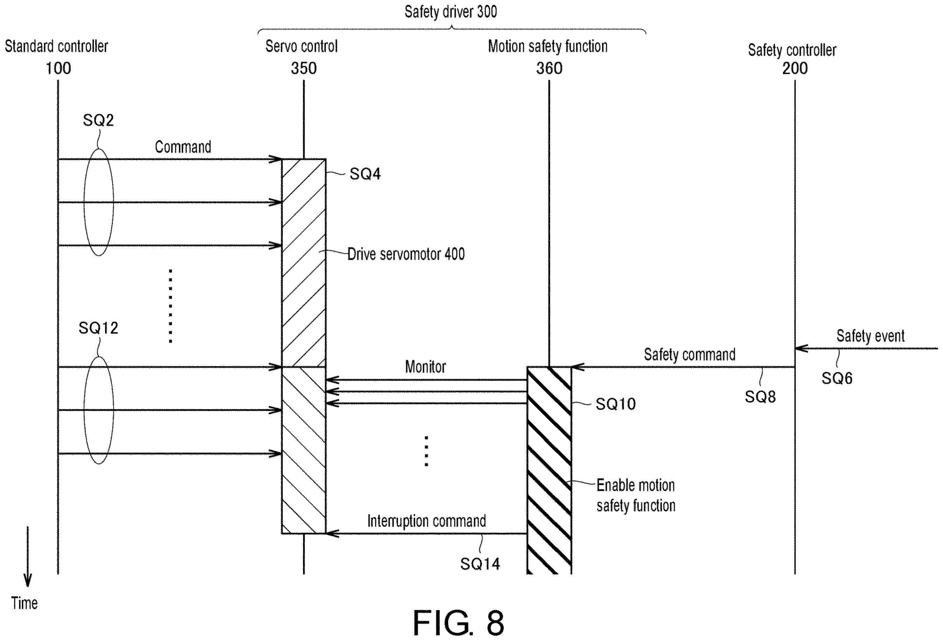

Fig. 8 is a sequence diagram illustrating an example of a process procedure related to the safety functions 250 of the safety driver 300 of the control system 1 according to the present embodiment. With reference to Fig. 8, a command is cyclically calculated through the standard control 150 of the standard controller 100 and is output to the safety driver 300 (servo control 350) (sequence SQ2). The servo control 350 of the safety driver 300 drives the servomotor 400 in response to the command from the standard control 150 (sequence SQ4).

When a safety event from the safety device 240 (for example, a safety sensor) occurs at a certain timing (sequence SQ6), the safety controller 200 outputs a safety command to the safety driver 300 (motion safety function 360) (sequence SQ8). The motion safety function 360 of the safety driver 300 enables the designated safety function 250 in response to the safety command (sequence SQ10).

In response to enabling of the safety function 250, a command corresponding to the enabled safety function 250 is calculated and output from the standard control 150 of the standard controller 100 (sequence SQ12). On the other hand, the safety driver 300 (motion safety function 360) monitors whether or not an operation state of the servomotor 400 is within a predefined restriction range. When it is determined that the operation state of the servomotor 400 is not within the predefined restriction range, or a predefined stoppage time comes, the safety driver 300 (motion safety function 360) interrupts the supply of power to the servomotor 400 (sequence SQ14).

As described above, the safety driver 300 can drive the servomotor 400 in response to a command from the standard controller 100 (standard control 150), and can also realize the motion safety function 360 for the safety controller 200 (safety function 250) in response to a command for enabling the safety function 250.

### <D. Motion safety function 360 of control system 1>

Next, an example of the motion safety function 360 provided by the control system 1 will be described.

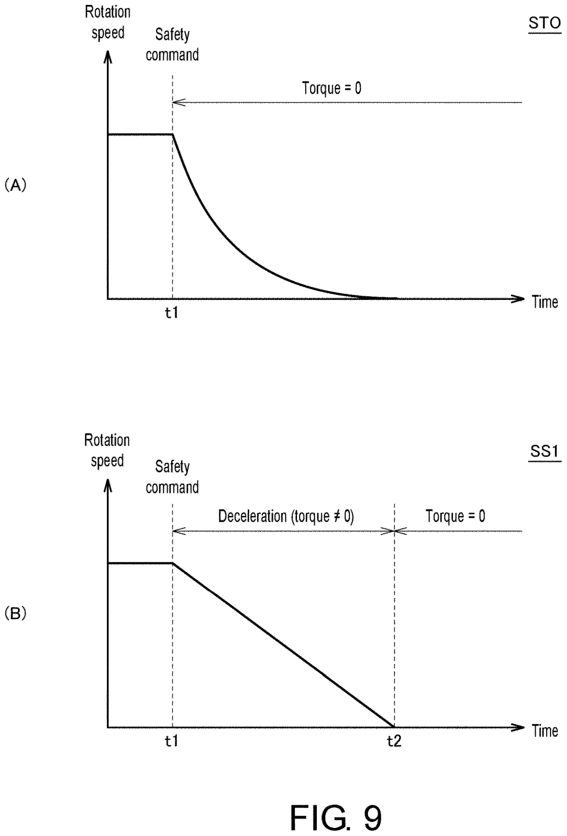

Fig. 9 is a diagram illustrating an example of the motion safety function 360 provided by the control system 1 according to the present embodiment. (A) of Fig. 9 illustrates an example of a behavior of the servomotor 400 corresponding to STO, and (B) of Fig. 9 illustrates an example of a behavior of the servomotor 400 corresponding to SS1.

With reference to (A) of Fig. 9, when a safety command (STO) is output at time point t1 in a state in which the servomotor 400 is being operated at a certain rotation speed, the safety driver 300 interrupts the supply of power to the servomotor 400 to make torque generated by the servomotor 400 zero. As a result, the servomotor 400 is rotated by the inertia and is then stopped. In a case where the servomotor 400 is provided with a brake, the servomotor 400 may be immediately stopped.

With reference to Fig. 9(B), when a safety command (SS1) is output at time point t1 in a state in which the servomotor 400 is being operated at a certain rotation speed, the safety driver 300 reduces the rotation speed at a predefined acceleration. In this case, the safety driver 300 may perform power recovery (that is, regeneration) from the servomotor 400. When the rotation speed of the servomotor 400 becomes zero at time point t2, the safety driver 300 interrupts the supply of power to the servomotor 400 to make torque generated by the servomotor 400 zero. After time point t2, the same state as the state corresponding to STO illustrated in Fig. 9(A) is brought.

Of STO illustrated in Fig. 9(A) and SS1 illustrated in Fig. 9(B), a safety function that causes more safe stoppage is selected as appropriate in accordance with characteristics or the like of a facility that is mechanically connected to the servomotor 400.

Document: ETG.6100.2S(R) V1.2.0 described above defines not only the motion safety functions illustrated in Figs. 9(A) and 9(B) but also a plurality of motion safety functions. Settings for defining a behavior of the servomotor 400 are necessary to realize each motion safety function.

### <E. Installation examples of standard control and safety control>

As described above, in the control system 1 according to the present embodiment, safety communication can be performed through data communication and the logical connection 4. Next, installation examples of standard control and safety control using each type of communication will be described.

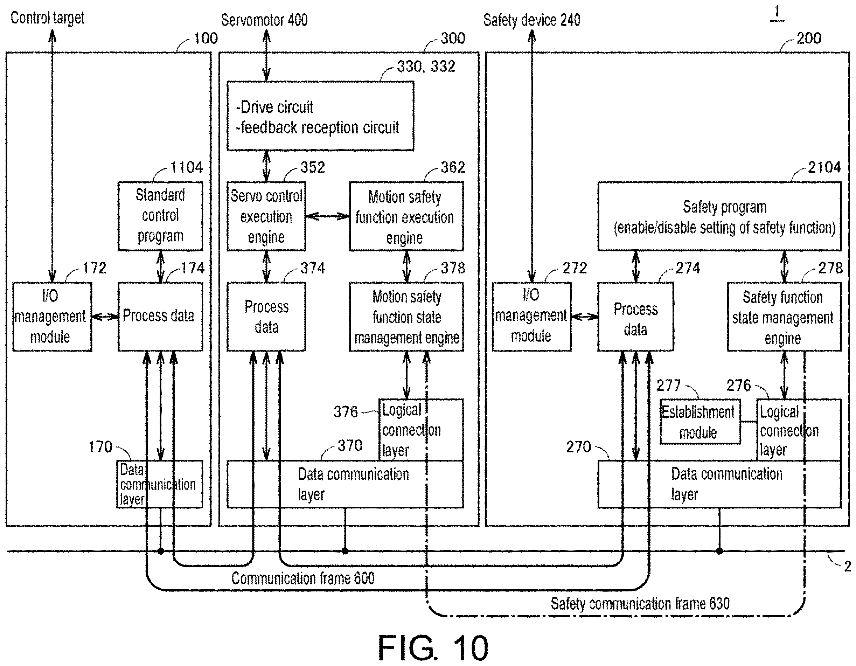

Fig. 10 is a schematic diagram illustrating installation examples of standard control and safety control in the control system 1 according to the present embodiment. For convenience of description, Fig. 10 illustrates an example of the control system 1 including the single safety driver 300 in addition to the standard controller 100 and the safety controller 200.

As illustrated in Fig. 10, the standard controller 100 includes a data communication layer 170 and an I/O management module 172 as principal functional constituents. The safety controller 200 includes a data communication layer 270, an I/O management module 272, a logical connection layer 276, and a safety function state management engine 278 as principal functional constituents. The safety driver 300 includes a data communication layer 370, a logical connection layer 376, and a motion safety function state management engine 378, a servo control execution engine 352, and a motion safety function execution engine 362 as principal functional constituents.

The data communication layer 170, the data communication layer 270, and the data communication layer 370 are used to transfer the communication frame 600 on the field network 2.

The logical connection layer 276 of the safety controller 200 and the logical connection layer 376 of the safety driver 300 exchange safety communication frames 630. In other words, the logical connection layer 276 and the logical connection layer 376 exchange commands and data by using the safety communication frame 630 included in the communication frame 600 according to a protocol (FSoE in the present embodiment) for establishing the logical connection 4. The safety controller 200 includes an establishment module 277 for establishing the logical connection 4 with the safety driver 300 via the logical connection layer 276.

In the standard controller 100, the I/O management module 172 exchanges signals with a control target to update process data 174. The standard control program 1104 executed in the standard controller 100 executes control calculation by referring to the process data 174, and updates the process data 174 as an execution result of the control calculation.

In the safety controller 200, the I/O management module 272 exchanges signals with the safety device 240 to update process data 274.

The safety program 2104 executed in the safety controller 200 executes control calculation by referring to the process data 274 and the safety function state management engine 278, and updates the process data 274 or outputs an internal command to the safety function state management engine 278 on the basis of an execution result of the control calculation.

The safety function state management engine 278 generates a safety command for enabling or disabling the specific motion safety function 360 for the specific safety driver 300 in accordance with the execution result of the control calculation performed by the safety program 2104. The logical connection layer 276 exchanges necessary commands and data with the logical connection layer 376 of the target safety driver 300 by using the safety communication frames 630 in response to the command from the safety function state management engine 278.

In the safety driver 300, the servo control execution engine 352 executes control calculation related to servo control by referring to process data 374 and information regarding a feedback signal acquired via the feedback reception circuit 332. The servo control execution engine 352 updates the process data 374 and outputs an internal command to the drive circuit 330 on the basis of an execution result of the control calculation. The drive circuit 330 drives the servomotor 400 in response to the command from the servo control execution engine 352.

The motion safety function state management engine 378 manages a state of the motion safety function 360 in response to a safety command from the safety controller 200. The safety status 70 is stored in the motion safety function state management engine 378. The motion safety function state management engine 378 outputs an internal command to the motion safety function execution engine 362 according to designation information included in the safety status 70.

In the motion safety function execution engine 362, the motion safety program 3204 is executed to realize the designated motion safety function 360.

The logical connection layer 376 exchanges necessary commands and data with the logical connection layer 276 of the safety controller 200 by using the safety communication frames 630 in response to a command from the motion safety function state management engine 378.

### <F. Example of transition in enabling or disabling of motion safety function>

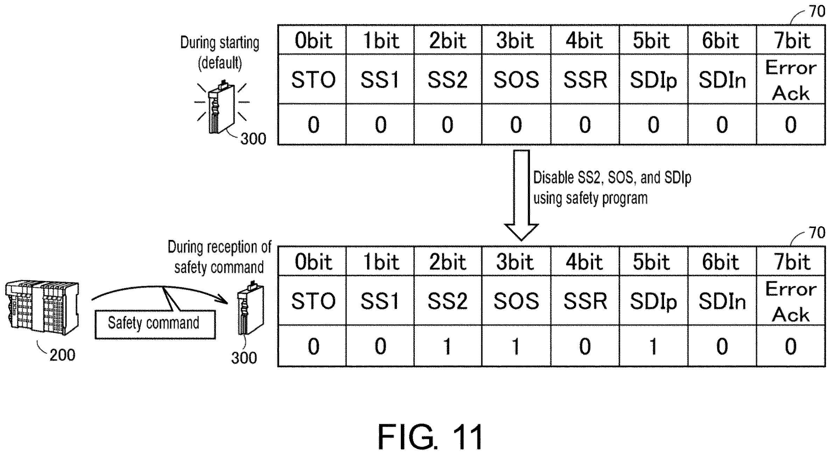

Fig. 11 is a schematic diagram illustrating an example of transition in enabling or disabling of the motion safety function 360 according to the present embodiment.

As described above, in the safety driver 300, the flags corresponding to all of the motion safety functions 360 are set to "0" as a default regardless of whether or not the motion safety functions 360 is installed. In other words, the flags of all bits included in the safety status 70 are set to "0" as a default.

When a user designates enabling or disabling of the motion safety functions 360 such that the flag of the second bit corresponding to SS2 is set to "1" in order to disable SS2, the flag of the third bit corresponding to SOS is set to "1" in order to disable SOS, and the flag of the fifth bit corresponding to SDIp is set to "1" in order to disable SDIp, by using the support device 500, the safety program 2104 is automatically generated in accordance with the designation of enabling or disabling. The safety controller 200 executes the safety program 2104 to transmit a safety command including the information regarding the designation, given by the user, of enabling or disabling of the motion safety function 360 to the safety driver 300.

When the safety driver 300 receives the safety command from the safety controller 200, the designation information included in the safety status 70 is updated according to the designation information included in the safety command. More specifically, the designation information included in the safety status 70 is overwritten to be the same as the designation information included in the safety command.

As described above, in the control system 1 according to the present embodiment, after connection in the field network 2 is established, setting of enabling or disabling of the specific motion safety function 360 can be changed from a default state by using a safety command.

### <G. Example of safety program>

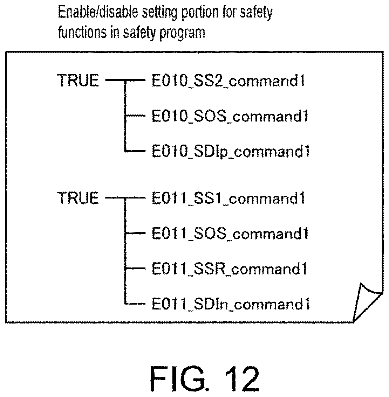

Next, with reference to Fig. 12, an example of an enable/disable setting portion for the safety functions in the safety program 2104 will be described. Fig. 12 is a schematic diagram illustrating an enable/disable setting portion for the safety functions in the safety program 2104 according to the present embodiment.

As illustrated in Fig. 12, source code for designating enabling or disabling of the motion safety function 360 is written in a part of the safety program 2104 for each of one or a plurality of safety drivers 300 included in the control system 1.

More specifically, "TRUE" is designated for SS2, SOS, and SDIp with respect to the safety driver 300 correlated with the identification code "E010". "TRUE" is designated for SS1, SOS, SSR, and SDIn with respect to the safety driver 300 correlated with the identification code "E011".

A flag is set to "1" in each bit included in designation information with respect to the motion safety function 360 for which "TRUE" is designated. In other words, in a case where the safety program 2104 generated on the basis of the source code illustrated in Fig. 12 is executed, designation information for designating flags respectively corresponding to SS2, SOS, and SDIp as "1" with respect to the safety driver 300 correlated with "E010" is included in a safety command, and designation information for designating flags respectively corresponding to SS1, SOS, SSR, and SDIn as "1" with respect to the safety driver 300 correlated with "E011" is included in a safety command.

In the related art, such source code is required to be written through an input operation of a user, but, in the present embodiment, the user only designates enable/disable setting of the safety function in the support device 500, and thus the safety program 2104 in which the same source code is written is automatically generated.

The safety program 2104 that is automatically generated by the support device 500 cannot be edited by the user. For example, the generated safety program 2104 is not displayed on a display part of the support device 500 or the like, and the user cannot recognize details of the program and cannot edit the program either. Alternatively, the generated safety program 2104 may be displayed on the display part of the support device 500 or the like, but the user cannot edit details of the program.

Consequently, since the safety program 2104 generated by the support device 500 is not able to be edited by the user, it is possible to prevent the occurrence of a problem that set details of enabling or disabling of a safety function designated for the support device 500 by the user do not coincide with set details in the safety program 2104 generated by the support device 500.

### <H. User interface related to motion safety function 360>

Next, an example of a user interface related to the motion safety function 360 provided by the support device 500 will be described.

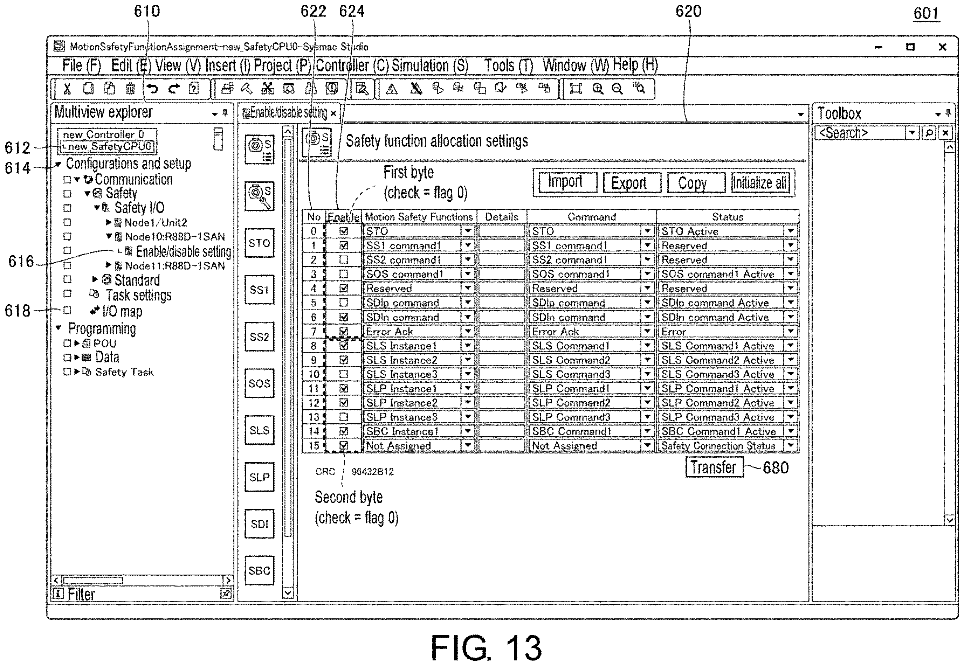

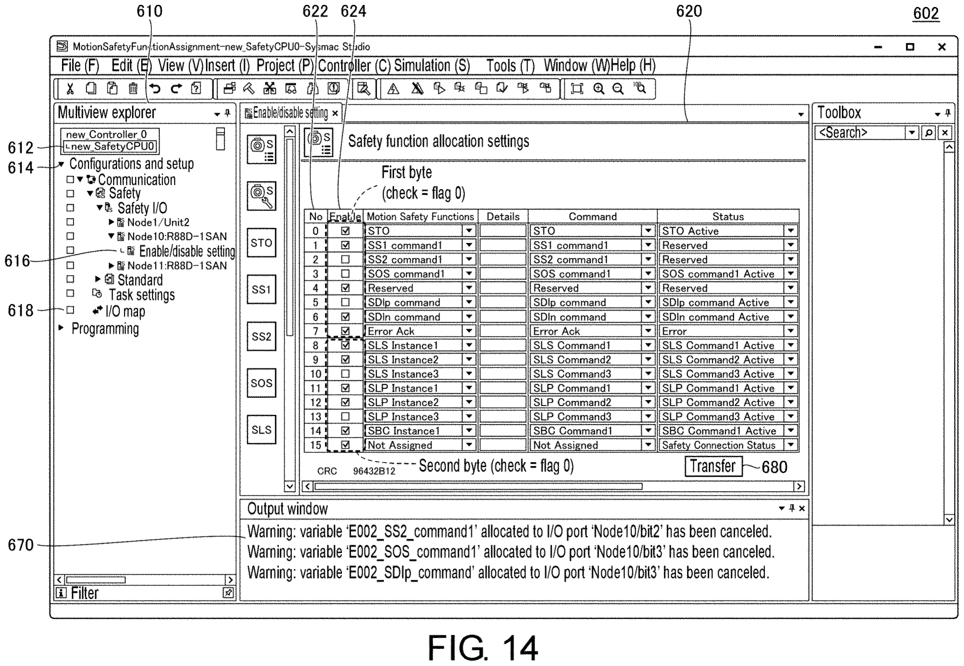

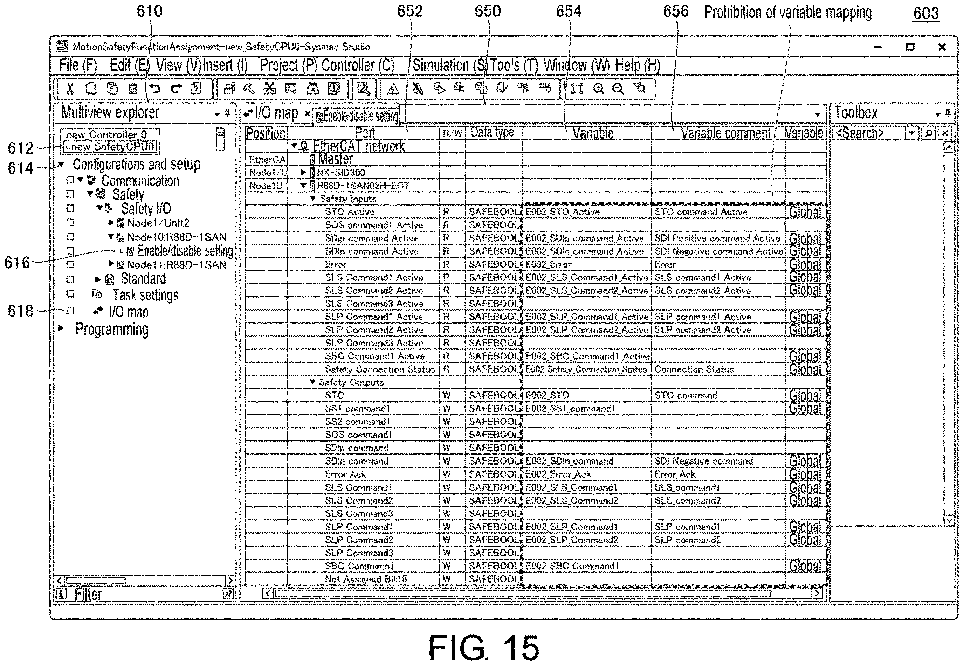

Figs. 13 and 14 are diagrams illustrating examples of user interfaces for setting enabling or disabling of the motion safety function 360 provided by the support device 500 according to the present embodiment. Fig. 15 is a diagram illustrating an example of a user interface for setting a variable in the safety program 2104 provided by the support device 500 according to the present embodiment. The user may execute the support program 5104 (enable/disable setting support program 90) in the support device 500 to display screens related to user interfaces as illustrated in Figs. 13 to 15.

As illustrated in Fig. 13, a multiview explorer field 610 is provided on the left of a screen related to a user interface 601. The multiview explorer field 610 includes a switching switch 612 for designating a development target program. In this example, "new_SafetyCPU0" corresponding to the safety program 2104 is designated in the switching switch 612.

The multiview explorer field 610 includes a configurations and setup switch 614 for setting a constituent connected to a network in the control system 1. A lower-level layer developed by the configurations and setup switch 614 includes an enable/disable setting icon 616 for designating enabling or disabling of the motion safety function 360 and an I/O map icon 618 for mapping a variable referred to by the safety program 2104. The "variable" includes data and a container or a storage region in which the data is stored. For example, the variable referred to by the safety program 2104 is correlated with a state value of the servomotor 400 or the like, and each motion safety function 360 is realized according to the state value correlated with the variable.

The enable/disable setting icon 616 is provided in each of one or a plurality of safety drivers 300 connected to the control system 1, and, in this example, the enable/disable setting icon 616 corresponding to the safety driver 300 of Node10 is selected.

A screen 620 for designating enabling or disabling of the motion safety function 360 is displayed at the center of the screen related to the user interface 601. The screen 620 includes a number field 622 and a flag field 624.

In the number field 622, numbers are shown for the respective motion safety functions 360 in order from the first bit in the same order as the designation information included in the safety status 70. In this example, since the motion safety function 360 of SSR in the fourth bit is not installed, all information corresponding to the fourth bit is "Reserved".

The flag field 624 is provided with a check box that can be checked by the user. In a case where the user designates "TRUE" in the source code of the safety program 2104, the user may uncheck the check box of the flag field 624. For the motion safety function 360 for which the check box is unchecked, the flag is set to "1" in the designation information included in the safety command. On the other hand, for the motion safety function 360 for which the check box is checked, the flag is set to "0" in the designation information included in the safety command. In above-described way, the user can easily perform enable/disable setting of the motion safety function 360 in the safety command by checking or unchecking the check box of the flag field 624.

With respect to enable/disable setting of the motion safety function 360, the user can change the default state in the second byte of the safety status 70, and, as illustrated in Fig. 13, the user can easily perform enable/disable setting in the second byte by checking or unchecking the check box of the flag field 624.

In the example illustrated in Fig. 13, SS2, SOS, and SDIp are unchecked in the check box of the flag field 624. Thus, in the safety command, the flags corresponding to SS2, SOS, and SDIp are designated as "1".

As described above, the user designates enabling or disabling of each motion safety function 360 in the safety driver 300, and then selects a transfer icon 680, and thus the safety program 2104 corresponding to the designation of enabling or disabling can be generated. The generated safety program 2104 is transferred to the safety controller 200.

As illustrated in Fig. 14, when the specific motion safety function 360 is disabled in the check box of the flag field 624, the screen is switched to a screen related to a user interface 602, and a notification that the variable correlated with the disabled specific motion safety function 360 has been canceled is provided in an output window 670 located at the lower part of the screen.

As illustrated in Fig. 15, when the I/O map icon 618 is selected, the screen is switched to a screen related to a user interface 603. A screen 650 for mapping a variable to each motion safety function 360 is displayed at the center of the screen related to the user interface 603. The screen 650 includes a port field 652, a variable field 654, and a variable comment field 656.

Each motion safety function 360 installed in the selected safety driver 300 (Node10 in this example) is shown in the port field 652. A variable correlated with each motion safety function 360 is shown in the variable field 654. A comment to the variable correlated with each motion safety function 360 is shown in the variable comment field 656.

Here, as illustrated in Fig. 14, when the specific motion safety function 360 is disabled in the check box of the flag field 624, the variable correlated with the disabled specific motion safety function 360 is canceled. Thus, the variable field 654 and the variable comment field 656 become blank in the screen related to the user interface 603 illustrated in Fig. 15. For example, in this example, since SS2 and SOS are disabled in the check boxes of the flag field 624, and the variables are canceled, the variable field 654 and the variable comment field 656 corresponding to SS2 and SOS become blank.

As described above, in response to designation of disabling of the specific motion safety function 360, the support device 500 prohibits the use of the variable referred to by the safety program 2104 related to the specific motion safety function 360. Consequently, it is possible to prevent a situation in which the user unintentionally sets a variable referred to by the safety program 2104 related to the disabled motion safety function 360.

### <1. Safety enable/disable program generation process>

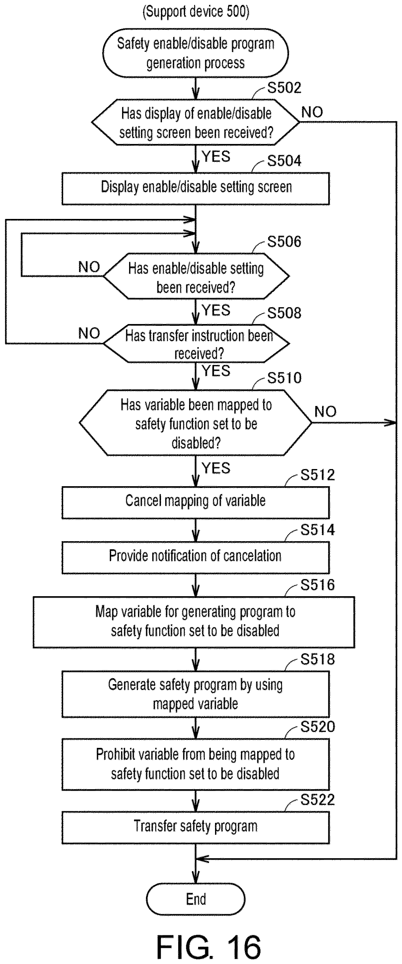

Next, a safety enable/disable program generation process executed by the support device 500 will be described. Fig. 16 is a flowchart for describing a safety enable/disable program generation process executed by the support device 500 according to the present embodiment.

As illustrated in Fig. 16, the support device 500 determines whether or display of a safety function enable/disable setting screen has been received (S502). In a case where display of safety function enable/disable setting screen has not been received (NO in S502), the support device 500 finishes the present process.

On the other hand, in a case where display of safety function enable/disable setting screen has been received (YES in S502), the support device 500 displays the safety function enable/disable setting screen as illustrated in Fig. 13 (S504).

Next, the support device 500 determines whether or not safety function enable/disable setting has been received (S506). Specifically, the support device 500 whether the check box of the flag field 624 has been checked or unchecked by a user in the screen related to the user interface 601 illustrated in Fig. 13. In a case where safety function enable/disable setting has not been received (NO in S506), the support device 500 repeatedly performs the process in S506 until enable/disable setting is received.

On the other hand, in a case where safety function enable/disable setting has been received (YES in S506), the support device 500 determines whether or not an instruction for transfer has been received (S508). Specifically, the support device 500 determines whether or not the transfer icon 680 has been selected in the screen related to the user interface 601 illustrated in Fig. 13. In a case where an instruction for transfer has not been received (NO in S508), the support device 500 returns to the process in S506.

On the other hand, in a case where an instruction for transfer has been received (YES in S508), the support device 500 determines whether or not a variable has been mapped to the motion safety function 360 set to be disabled (S510). In a case where a variable has not been mapped to the motion safety function 360 set to be disabled (NO in S510), the support device 500 finishes the present process.

On the other hand, in a case where a variable has been mapped to the motion safety function 360 set to be disabled (YES in S510), the support device 500 cancels the variable corresponding to the motion safety function 360 set to be disabled (S512), and provides a notification of cancelation (S514). For example, the support device 500 provides a notification that the variable correlated with the disabled specific motion safety function 360 has been canceled in the output window 670 illustrated in Fig. 14.

Next, the support device 500 maps a variable for generating the safety program 2104 to the safety function set to be disabled (S516). Regarding the variable used in this case, it is preferable that a unique name that is not set by the user is used as a variable name. If the same name is used for the variable name, the name may be identified by adding a subscript such as a number. The support device 500 generates the safety program 2104 by using the variable mapped in S516 (S518). In a case where a variable for generating the safety program 2104 has already been mapped to a safety function set to be disabled, the support device 500 may generate the safety program 2104 by using the variable.

The support device 500 prohibits mapping of a variable to the motion safety function 360 set to be disabled (S520), and transfers the generated safety program 2104 to the safety controller 200 (S522). In this case, the support device 500 may convert source code into object code by performing a build, and transfer the safety program 2104 to the safety controller 200 in the form of the object code, or transfer the safety program 2104 to the safety controller 200 in the form of source code without performing the build. The support device 500 may transfer the safety program 2104 to the safety controller 200 via the standard controller 100, or may directly transfer the safety program 2104 to the safety controller 200 without using the standard controller 100. Thereafter, the support device 500 finishes the present process.

As described above, the support device 500 generates the safety program 2104 in accordance with designation, given by the user, of enabling or disabling of the specific motion safety function 360, and transfers the generated safety program 2104 to the safety controller 200. Consequently, the user can generate the safety program 2104 for designating enabling or disabling of the specific motion safety function 360 without writing source code, and can thus easily set enabling or disabling of the motion safety function 360.

In response to designation of disabling of the specific motion safety function 360, the support device 500 prohibits the use of the variable referred to by the safety program 2104 related to the specific motion safety function 360. Consequently, it is possible to prevent a situation in which the user unintentionally sets a variable referred to by the safety program 2104 related to the disabled motion safety function 360.

The support device 500 can notify the user that a variable referred to by the safety program 2104 related to the disabled motion safety function 360 is prohibited from being used.

### <J. Safety command reception process>

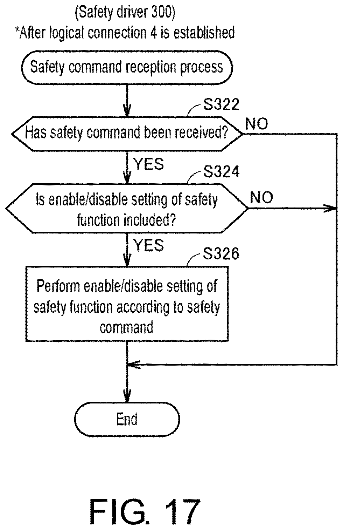

Next, a safety command reception process executed by the safety driver 300 will be described. Fig. 17 is a flowchart for describing a safety command reception process executed by the safety driver 300 according to the present embodiment. The safety driver 300 executes a safety command reception process illustrated in Fig. 17 after connection in the field network 2 is established and the logical connection 4 is established.

As illustrated in Fig. 17, the safety driver 300 determines whether or not a safety command has been received from the safety controller 200 (S322). In a case where a safety command has not been received (NO in S322), the safety driver 300 finishes the present process.

On the other hand, in a case where a safety command has been received (YES in S322), the safety driver 300 determines whether or not enable/disable setting of the motion safety function 360 is included in the safety command (S324). In other words, the safety driver 300 determines whether or not designation of enabling or disabling of the safety function that is given by the user and is input from the support device 500 is included in the safety command that is transferred due to execution of the safety program 2104 automatically generated by the support device 500.

In a case where enable/disable setting of the motion safety function 360 is not included in the safety command (NO in S324), the safety driver 300 finishes the present process.

On the other hand, in a case where enable/disable setting of the motion safety function 360 is included in the safety command (YES in S324), the safety driver 300 performs enable/disable setting of the specific motion safety function 360 according to designation information included in the safety command (S326). For example, as illustrated in Fig. 11, in a case where the safety command including designation information indicating that SS2 and SOS are disabled and SDIp is enabled is received, the safety driver 300 also disables SS2 and SOS and enables SDIp in the designation information included in the safety status 70. Thereafter, the safety driver 300 finishes the present process.

As described above, the safety driver 300 performs enable/disable setting of the motion safety function 360 in response to a safety command that is received after the logical connection 4 is established. Consequently, the user can change enabling or disabling of the specific motion safety function 360 from a default state by using the safety command.

### <K. Modification examples>

In the user interface 601 for setting enabling or disabling of the safety function illustrated in Fig. 13, the support device 500 receives checking or unchecking of the check box of the flag field 624 with respect to the motion safety function 360 (SSR in this example) that is not installed in the safety driver 300, but is not limited thereto. For example, the support device 500 may not receive checking or unchecking of the check box of the flag field 624 with respect to the motion safety function 360 that is not installed in the safety driver 300. More specifically, the support device 500 does not need to display the check box of the flag field 624 with respect to the motion safety function 360 that is not installed in the safety driver 300, and may bring the motion safety function into a non-operating state even if the check box is displayed.

In the user interface 601 for setting enabling or disabling of the safety function illustrated in Fig. 13, the support device 500 receives enable/disable setting of the motion safety function 360 for each safety driver 300, but is not limited thereto. For example, since a user may want to make enabled/disabled settings of the motion safety function 360 common to the plurality of safety drivers 300, the support device 500 may provide a user interface for receiving enabled/disabled settings of the motion safety function 360 common to the plurality of safety drivers 300. In this case, the support device 500 may collectively generate the safety programs 2104 including the enabled/disabled settings of the motion safety function 360 having the same details for the plurality of safety drivers 300, and collectively transfer the generated safety programs 2104 to the plurality of respective safety drivers 300 when the transfer icon 680 is selected.

### <L. Appendix>

The present embodiment described above includes the following technical concept.

### <M. Advantages>

In the control system 1 according to the present embodiment, a user designates enabling or disabling of the specific motion safety function 360 for the support device 500, and thus the safety program 2104 is generated in accordance with the designation of enabling or disabling and is transferred to the safety controller 200. Consequently, the user can generate the safety program 2104 for designating enabling or disabling of the specific motion safety function 360 without writing source code, and can thus easily set enabling or disabling of the motion safety function 360.

It should be considered that the embodiments disclosed this time are exemplary in all respects and not limited. The scope of the present invention is shown by the claims, not the above description, and is intended to include all modifications within the meaning and the scope equivalent to the claims.

### [Reference Signs List]

1 Control system
2 Field network
4 Logical connection
70 Safety status
90 Enable/disable setting support program
100 Standard controller
102, 202, 312, 314, 502 Processor
104, 204, 316, 504 Main memory
106 Higher-level network controller
108, 208, 302 Field network controller
110, 210, 320, 510 Storage
112 Memory card interface
114 Memory card
116 Local bus controller
118, 218, 518 Processor bus
120, 220, 520 USB controller
150 Standard control
170, 270, 370 Data communication layer
172, 272 Management module
174, 274, 374 Process data
200 Safety controller
216 Safety local bus controller
230 Safety I/O unit
240 Safety device
250 Safety function
276, 376 Logical connection layer
277 Establishment module
278 Safety function state management engine
300 Safety driver
310 Control part
330 Drive circuit
332 Feedback reception circuit
350 Servo control
352 Servo control execution engine
360 Motion safety function
362 Motion safety function execution engine
378 Motion safety function state management engine
400 Servomotor
402 Three-phase AC motor
404 Encoder
500 Support device
506 Input part
508 Output part
512 Optical drive
514 Recording medium
600 Communication frame
601, 602, 603 User interface
610 Multiview explorer field
612 Switching switch
614 Configurations and setup switch
616 Enable/disable setting icon
618 I/O map icon
620, 650 Screen
622 Number field
624 Flag field
630 Safety communication frame
652 Port field
654 Variable field
656 Variable comment field
670 Output window
680 Transfer icon
700 Control word
702 Bit field
704 Name field
706 Description field
1102, 2102 System program
1104 Standard control program
1106, 2106, 3206 Setting information
2104 Safety program
3202 Servo control program
3204 Motion safety program
5104 Support program
5106 Project data
5108 Standard control source program
5110 Standard controller setting information
5112 Safety source program
5114 Safety controller setting information
5116 Safety driver setting information
5212 Generation unit
5216 Reception unit
5218 Transfer unit

## Claims

1. A support device (500) that is adapted to support development of a safety program (2104) related to at least one or more safety functions (250) executed by a controller (200) which controller is adapted to control a drive device (300) driving a motor (400), the safety program (2104) comprising information for disabling a specific safety function (250) among the at least one or more safety functions (250), the support device (500) comprising:
a reception unit (5216) that is adapted to receive designation, given by a user, of enabling or disabling of each of the at least one or more safety functions (250);
a generation unit (5212) that is adapted to generate the safety program (2104) in accordance with the designation of enabling or disabling received by the reception unit (5216); and
a transfer unit (5218) that is adapted to transfer the safety program (2104) generated by the generation unit (5212) to the controller (200), the support device (500) **characterized in that**
the safety program (2104) generated by the generation unit (5212) is uneditable by the user.

2. A control system (1) comprising:
a drive device (300) that has at least one or more safety functions (250) and that is adapted to drive a motor (400);
a controller (200) that adapted to output a command related to the at least one or more safety functions (250) to the drive device (300) according to a safety program (2104); and a support device (500) according to claim 1.

3. The control system (1) according to claim 2,
wherein the support device (500) is adapted to provide a user interface (601, 602, 603) for receiving the designation of enabling or disabling of each of the at least one or more safety functions (250) via the reception unit (5216).

4. The control system (1) according to claim 2 or 3,
wherein the support device (500) is adapted to provide a user interface (601, 602, 603) for receiving the designation of enabling or disabling of each of the at least one or more safety functions (250) via the reception unit (5216) for a specific drive device (300) selected from among a plurality of the drive devices (300).

5. The control system (1) according to any one of claims 2 to 4,
wherein, in response to designation of disabling of the specific safety function (250) among the at least one or more safety functions (250), the support device (500) is adapted to prohibit use of a variable referred to by the safety program (2104) related to the specific safety function (250).

6. The control system (1) according to claim 5,
wherein the support device (500) is adapted to provide a notification of prohibition of use of the variable.

7. A support program (5104) for supporting development of a safety program (2104) related to at least one or more safety functions (250) executed by a controller (200) which controller is adapted to control a drive device (300) driving a motor (400), the support program (5104) comprising information for disabling a specific safety function (250) among the at least one or more safety functions (250), the support program (5104) causing a computer to execute:
receiving designation, given by a user, of enabling or disabling of each of the at least one or more safety functions (250);
generating the safety program (2104) in accordance with the received designation of enabling or disabling; and
transferring the generated safety program (2104) to the controller (200), the support program (5104) **characterized in that**
the safety program (2104) that has been generated is uneditable by the user.

## Patentansprüche

1. Unterstützungsvorrichtung (500), die angepasst ist, um Entwicklung eines Sicherheitsprogramms (2104) zu unterstützen, das sich auf mindestens eine oder mehrere Sicherheitsfunktionen (250) bezieht, die von einer Steuerung (200) ausgeführt werden, wobei die Steuerung angepasst ist, um eine Antriebsvorrichtung (300) zu steuern, die einen Motor (400) antreibt, wobei das Sicherheitsprogramm (2104) Informationen zum Deaktivieren einer spezifischen Sicherheitsfunktion (250) aus den mindestens einen oder mehreren Sicherheitsfunktionen (250) umfasst, wobei die Unterstützungsvorrichtung (500) umfasst:
eine Empfangseinheit (5216), die angepasst ist, um Zuordnung, gegeben durch einen Benutzer, des Aktivierens oder Deaktivierens jeder der mindestens einen oder mehreren Sicherheitsfunktionen (250) zu empfangen;
eine Erzeugungseinheit (5212), die angepasst ist, um das Sicherheitsprogramm (2104) in Übereinstimmung mit der Zuordnung des Aktivierens oder Deaktivierens, empfangen von der Empfangseinheit (5216), zu erzeugen; und
eine Übertragungseinheit (5218), die angepasst ist, um das Sicherheitsprogramm (2104), erzeugt durch die Erzeugungseinheit (5212), an die Steuerung (200) zu übertragen, wobei die Unterstützungsvorrichtung (500) **dadurch gekennzeichnet ist, dass** das von der Erzeugungseinheit (5212) erzeugte Sicherheitsprogramm (2104) für den Benutzer nicht editierbar ist.

2. Steuerungssystem (1), umfassend:
eine Antriebsvorrichtung (300), die mindestens eine oder mehrere Sicherheitsfunktionen (250) aufweist und die angepasst ist, um einen Motor (400) anzutreiben;
eine Steuerung (200), die angepasst ist, um einen Befehl bezüglich der mindestens einen oder mehreren Sicherheitsfunktionen (250) an die Antriebsvorrichtung (300) gemäß einem Sicherheitsprogramm (2104) auszugeben; und
eine Unterstützvorrichtung (500) gemäß Anspruch 1.

3. Steuerungssystem (1) gemäß Anspruch 2,
wobei die Unterstützungsvorrichtung (500) angepasst ist, um eine Benutzerschnittstelle (601, 602, 603) zum Empfangen der Zuordnung des Aktivierens oder Deaktivierens jeder der mindestens einen oder mehreren Sicherheitsfunktionen (250) über die Empfangseinheit (5216) bereitzustellen.

4. Steuerungssystem (1) gemäß Anspruch 2 oder 3,
wobei die Unterstützungsvorrichtung (500) angepasst ist, um eine Benutzerschnittstelle (601, 602, 603) zum Empfangen der Zuordnung des Aktivierens oder Deaktivierens jeder der mindestens einen oder mehreren Sicherheitsfunktionen (250) über die Empfangseinheit (5216) für eine bestimmte Antriebsvorrichtung (300), die aus einer Vielzahl der Antriebsvorrichtungen (300) ausgewählt ist, bereitzustellen.

5. Steuerungssystem (1) gemäß einem der Ansprüche 2 bis 4,
wobei die Unterstützungsvorrichtung (500) als Reaktion auf die Zuordnung des Deaktivierens der spezifischen Sicherheitsfunktion (250) unter den mindestens einen oder mehreren Sicherheitsfunktionen (250) angepasst ist, die Verwendung einer Variablen zu verbieten, auf die sich das Sicherheitsprogramm (2104) im Zusammenhang mit der spezifischen Sicherheitsfunktion (250) bezieht.

6. Steuerungssystem (1) gemäß Anspruch 5,
wobei die Unterstützungsvorrichtung (500) angepasst ist, um eine Benachrichtigung über das Verbot der Verwendung der Variablen bereitzustellen.

7. Unterstützungsprogramm (5104) zum Unterstützen der Entwicklung eines Sicherheitsprogramms (2104), das sich auf mindestens eine oder mehrere Sicherheitsfunktionen (250) bezieht, die von einer Steuerung (200) ausgeführt werden,
wobei die Steuerung angepasst ist, um eine Antriebsvorrichtung (300) zu steuern, die einen Motor (400) antreibt, wobei das Unterstützungsprogramm (5104) Informationen zum Deaktivieren einer spezifischen Sicherheitsfunktion (250) unter der mindestens einen oder mehreren Sicherheitsfunktionen (250) umfasst, wobei das Unterstützungsprogramm (5104) einen Computer veranlasst, auszuführen:
Empfangen einer Zuordnung, gegeben von einem Benutzer, des Aktivierens oder Deaktivierens jeder der mindestens einen oder mehreren Sicherheitsfunktionen (250);
Erzeugen des Sicherheitsprogramms (2104) in Übereinstimmung mit der empfangenen Zuordnung des Aktivierens oder Deaktivierens; und
Übertragen des erzeugten Sicherheitsprogramms (2104) an die Steuerung (200), wobei das Unterstützungsprogramm (5104) **dadurch gekennzeichnet ist, dass** das Sicherheitsprogramm (2104), das erzeugt worden ist, von dem Benutzer nicht editierbar ist.

## Revendications

1. Dispositif d'aide (500) qui est adapté pour aider au développement d'un programme de sécurité (2104) lié à au moins une ou plusieurs fonctions de sécurité (250) exécutées par un dispositif de commande (200), le dispositif de commande étant adapté pour commander un dispositif d'entraînement (300) entraînant un moteur (400), le programme de sécurité (2104) comprenant des informations pour désactiver une fonction de sécurité (250) spécifique parmi les au moins une ou plusieurs fonctions de sécurité (250), le dispositif d'aide (500) comprenant :
une unité de réception (5216) qui est adaptée pour recevoir une désignation, donnée par un utilisateur, d'activation ou de désactivation de chacune des au moins une ou plusieurs fonctions de sécurité (250) ;
une unité de génération (5212) qui est adaptée pour générer le programme de sécurité (2104) en fonction de la désignation d'activation ou de désactivation reçue par l'unité de réception (5216) ; et
une unité de transfert (5218) qui est adaptée pour transférer le programme de sécurité (2104) généré par l'unité de génération (5212) au dispositif de commande (200), le dispositif d'aide (500) étant **caractérisé en ce que**
le programme de sécurité (2104) généré par l'unité de génération (5212) ne peut pas être modifié par l'utilisateur.

2. Système de commande (1) comprenant :
un dispositif d'entraînement (300) qui comporte au moins une ou plusieurs fonctions de sécurité (250) et qui est adapté pour entraîner un moteur (400) ;
un dispositif de commande (200) qui est adapté pour délivrer une commande liée aux au moins une ou plusieurs fonctions de sécurité (250) au dispositif d'entraînement (300) selon un programme de sécurité (2104) ; et
un dispositif d'aide (500) selon la revendication 1.

3. Système de commande (1) selon la revendication 2,
dans lequel le dispositif d'aide (500) est adapté pour fournir une interface utilisateur (601, 602, 603) pour recevoir la désignation d'activation ou de désactivation de chacune des au moins une ou plusieurs fonctions de sécurité (250) via l'unité de réception (5216) .

4. Système de commande (1) selon la revendication 2 ou 3,
dans lequel le dispositif d'aide (500) est adapté pour fournir une interface utilisateur (601, 602, 603) pour recevoir la désignation d'activation ou de désactivation de chacune des au moins une ou plusieurs fonctions de sécurité (250) via l'unité de réception (5216) pour un dispositif d'entraînement (300) spécifique sélectionné parmi une pluralité de dispositifs d'entraînement (300).

5. Système de commande (1) selon l'une quelconque des revendications 2 à 4,
dans lequel, en réponse à une désignation de désactivation de la fonction de sécurité (250) spécifique parmi les au moins une ou plusieurs fonctions de sécurité (250), le dispositif d'aide (500) est adapté pour interdire une utilisation d'une variable à laquelle fait référence le programme de sécurité (2104) lié à la fonction de sécurité (250) spécifique.

6. Système de commande (1) selon la revendication 5,
dans lequel le dispositif d'aide (500) est adapté pour fournir une notification d'interdiction d'utilisation de la variable.

7. Programme d'aide (5104) pour aider au développement d'un programme de sécurité (2104) lié à au moins une ou plusieurs fonctions de sécurité (250) exécutées par un dispositif de commande (200), le dispositif de commande étant adapté pour commander un dispositif d'entraînement (300) entraînant un moteur (400), le programme d'aide (5104) comprenant des informations pour désactiver une fonction de sécurité (250) spécifique parmi les au moins une ou plusieurs fonctions de sécurité (250), le programme d'aide (5104) amenant un ordinateur à exécuter :
la réception d'une désignation, donnée par un utilisateur, d'activation ou de désactivation de chacune des au moins une ou plusieurs fonctions de sécurité (250) ;
la génération du programme de sécurité (2104) en fonction de la désignation d'activation ou de désactivation reçue ; et
le transfert du programme de sécurité (2104) généré au dispositif de commande (200), le programme d'aide (5104) étant **caractérisé en ce que**
le programme de sécurité (2104) qui a été généré ne peut pas être modifié par l'utilisateur.
